# EUROPÄISCHE PATENTSCHRIFT

(11) **EP 3 550 954 B1**
(45) Veröffentlichungstag und Bekanntmachung des Hinweises auf die Patenterteilung: **25.11.2020**
(21) Anmeldenummer: 17838173.7
(22) Anmeldetag: 08.12.2017
(51) Int. Cl.: A01C 1/04, A01C 1/06

(54) **VORRICHTUNG UND VERFAHREN ZUM HERSTELLEN LÄNGLICHER PELLETS AUS EINER PASTÖSEN MASSE**
DEVICE AND METHOD FOR MAKING ELEONGATE PELLETS FROM A PASTY MATERIAL
DISPOSITIF ET PROCÉDÉ À FABRIQUER DES GRANULÉS OBLONGS DE MATÉRIAU PÂTEUX

(30) Priorität: 08.12.2016 DE 102016014584
(43) Veröffentlichungstag der Anmeldung: 16.10.2019
(73) Patentinhaber: Instant Seed GmbH, 15831 Mahlow (DE)
(72) Erfinder: KRECISZ, Adam, 13437 Berlin (DE)
(74) Vertreter: Jungblut & Seuss
(86) Internationale Anmeldenummer: PCT/DE2017/000414
(87) Internationale Veröffentlichungsnummer: WO 2018/103774

(56) Entgegenhaltungen:
- DE-A1-102014 005 451

## Beschreibung

### Gebiet der Erfindung.

Die Erfindung betrifft eine Vorrichtung zum Pelletieren einer pastösen Masse, insbesondere einer Saatgut enthaltenden pastösen Matrix, wobei die mit der Vorrichtung herstellbaren Pellets eine längliche Form aufweisen, mit zwei Flächen welche einen keilförmigen Pelletierraum bilden, welcher sich in vertikaler Richtung nach unten verjüngt und an seinem unteren Ende offen ist, und mit einer Antriebseinheit, welche die beiden Flächen antreibt mit der Maßgabe, dass die Flächen sich relativ zueinander bewegen. Die Erfindung betrifft des Weiteren eine Verwendung einer solchen Vorrichtung, sowie ein Verfahren zur Herstellung besagter Pellets mit besagter Vorrichtung.

Stand der Technik und Hintergrund der Erfindung.

Eine Vorrichtung des eingangs genannten Aufbaus ist aus der Literaturstelle DE 10 2014 005 451 A1 bekannt. Demgemäß werden die Pellets mittels zweier ebener und im Wesentlichen vertikal angeordneter Platten "gerollt", welche gegeneinander verwinkelt angeordnet sind, einen keilförmigen Pelletierraum bildend, und gegeneinander mittels eines Kurbeltriebs hin und her bewegt werden.

Aus dieser Literaturstelle ist des Weiteren eine ähnliche Vorrichtung bekannt, bei welcher eine Platte durch ein horizontal laufendes Transportband ersetzt ist, während die zweite Platte hierüber verwinkelt angeordnet ist und einen in horizontaler Richtung verlaufenden keilförmigen Pelletierraum bildet.

Beide insofern bekannten Vorrichtungen gewährleisten die Verarbeitbarkeit von länglichem Saatgut, wobei das Saatgut in eine Matrix eingebettet wird, ohne dabei zerstört zu werden. Bei dem Herstellungsprozess orientieren sich die länglichen Samen des Saatgutes in Längsrichtung der entstehenden Pellets.

Die insofern bekannten Vorrichtungen haben sich zwar in Hinblick auf die Qualität der Pellets grundsätzlich bewährt, jedoch sind sie im Aufbau und Antrieb aufwändig. Zudem entsteht das Problem einer seitlichen Abdichtung der gegeneinander laufen Platten bzw. des Bandes und der darüber angeordneten Platte. Eine großtechnische Herstellung der Pellets in Produktionsmaßstäben (upscale) ist nur schwer möglich.

Technisches Problem der Erfindung.

Der Erfindung liegt daher das technische Problem zu Grunde, eine Vorrichtung zum Pelletieren einer pastösen Masse, wobei die mit der Vorrichtung herstellbaren Pellets eine längliche Form aufweisen, anzugeben, welche einerseits insbesondere längliche Samen des Saatgutes schonend in die Matrix einbettet, andererseits aber einfacher baut und im Produktionsmaßstab eingesetzt werden kann.

Grundzüge der Erfindung und bevorzugte Ausführungsbeispiele.

Zur Lösung dieses technischen Problems lehrt die Erfindung eine Vorrichtung zum Pelletieren einer pastösen Masse, insbesondere einer (längliches) Saatgut enthaltenden pastösen Matrix, wobei die mit der Vorrichtung herstellbaren Pellets eine längliche Form aufweisen, mit einer eine erste Achse aufweisenden Außentrommel aufweisend eine Innenfläche, mit einer eine zweite Achse aufweisenden Innentrommel aufweisend eine Außenfläche, wobei die Innentrommel in die Außentrommel eingesetzt ist, mit einer Antriebseinheit, welche die Innentrommel und/oder die Außentrommel rotierend antreibt mit der Maßgabe, dass die Außenfläche der Innentrommel und die Innenfläche der Außentrommel sich relativ zueinander rotierend bewegen, wobei die Außenfläche und die Innenfläche einen, in einer in einer vertikalen Ebene verlaufenden Querschnittfläche betrachtet, keilförmigen Pelletierraum bilden, welcher sich in vertikaler Richtung nach unten verjüngt und an seinem unteren Ende offen ist.

Die Innenfläche der Außentrommel und die Außenfläche der Innentrommel bewegen sich relativ zueinander rotierend, wenn die Winkelgeschwindigkeiten der Außentrommel und der Innentrommel unterschiedlich sind.

Der Begriff des sich in vertikaler Richtung nach unten verjüngenden keilförmigen Pelletierraumes umfasst alle sich nach unten verjüngenden Formen, bei welchen ein Mittenwinkel der Keilform, bestimmt an der unteren Öffnung durch Tangenten an der Außenfläche der Innentrommel und der Innenfläche der Außentrommel sowie die winkelmittige Anordnung einer Keilmittenlinie dazwischen und als Winkel dieser Keilmittenlinie zur Horizonalen, eine vertikale Komponente aufweist, i.e. größer als null und kleiner als 180° ist. Insbesondere liegt dieser Mittenwinkel im Bereich von 20° bis 160°, vorzugsweise im Bereich von 40° bis 90°.

Die Erfindung ermöglicht die Herstellung von Saatgut Pellets von länglicher Form, wobei die Pellets eine erste Dimension aufweisen, welche die maximale Erstreckung des Pellets definiert, und eine zweite (und dritte) Dimension, welche orthogonal zur ersten Dimension steht. Letztere lässt sich typischerweise als Außendurchmesser und erstere als Länge definieren, da solche Pellets in erster Näherung zylinderähnliche Formen (Zylinderform, Fassform, Form eines Rotationsellipsoids, Sanduhrform etc.) aufweisen. Entsprechendes gilt in Bezug auf Samen in länglicher Form. Hierbei ist bemerkenswert, dass der Durchmesser eines solchen Pellets kleiner als die Länge eines Samens sein kann; die Samen sind in den Pellets mehr oder weniger gleich orientiert in Bezug auf die erste Dimension. Ein Winkel zwischen der ersten Dimension eines Pellets und der ersten Dimension eines Samens ist typischerweise kleiner als 45°, meist kleiner als 20°, vorzugsweise kleiner als 10°. Typischerweise liegt das Verhältnis der ersten Dimension zur zweiten Dimension im Bereich von 1,5 : 1 bis 15 : 1, typischerweise von 3 : 1 bis 10 : 1.

In einem solchen Saatgutpellet sind typischerweise 2 bis 15 Samen, insbesondere Grassamen, in einer Matrix eingebettet. Die Matrix kann, muss aber nicht, im Wesentlichen homogen sein. Im Falle einer nicht homogenen Matrix enthält diese typischerweise partikuläre Substanzen beliebiger Form und Konstitution, wobei das Volumen solcher Partikel erheblich kleiner als das Volumen eines Pellets oder auch eine Samens ist, typischerweise um zumindest den Faktor 10 oder 100. Beispiele für solche partikulären Substanzen sind: natürliche behandelte oder unbehandelte organische Fibern, wie Holzfibern, Cocosfibern, Flachsfibern, Baumwollfibern, Partikel enthaltend Herbizide, Insektizide, Fungizide, Humine, Planzenhormone, Aminosäuren, Kohlenhydrate, C11 bis C28 Fettsäuren, ionische Substanzen mit K, Mg, Mn, Fe, und/oder Cu Ionen, und/oder Fertilisierer. Auch kann die Matrix bzw. können die daraus gebildeten Pellets auch porös sein, mit einer Porosität von 0,001 bis 0,900, insbesondere 0,050 bis 0,300 (Volumen der Poren dividiert durch das Volumen des Pellets). Der Begriff der Einbettung bezeichnet dabei den Umstand, dass die Samen vollständig von der Matrix umhüllt sind.

Mit einer erfindungsgemäßen Vorrichtung herstellbare Pellets haben typischerweise einen Durchmesser von 1 bis 5 mm, insbesondere 1,5 bis 2,5 mm, und eine Länge von mehr als den Durchmesser, insbesondere im Bereich von 6 bis 20 mm.

Als Material der Matrix sind alle üblichen Materialien der Saatguttechnologie einsetzbar. Dies umfasst wasserlösliche organische Polymere, wie Polyvinylalkohols, Polysaccharide, Dextrin, Stärke, Pektin, Cellulose, Hemicellulose, Celluloseactetat, Ethylcellulose, Methylcellulose, Oxyethylcellulose, Oxypropylcellulose, Carboxymethylcellulose, Gelatine, Lignin, Pflanzenharze, Alginate, Chitin, Proteine, und anorganische Binder, wie Pflanzerde, Ton, Lehm und Bentonite.

Pastöse Massen bzw. pastöse Matrices im Sinne der Erfindung sind Pasten, i.e. in der Regel nicht mehr fließfähig, sondern streichfest. Dabei kann es sich nicht nur um streichfeste Feststoff-Flüssigkeitsgemische handeln, wie beispielsweise Ton, Lehm oder Bentonite, sondern auch um hochviskose organische Materialien, wie vorstehend genannt. Oftmals handelt es sich bei erfindungsgemäß einsetzbaren Materialien für die Matrix auch um nicht-Newton'sche Flüssigkeiten hoher Viskosität.

Als Saatgutsamen werden vorzugsweise Samen wie von Poaceae, Cyperaceae und Juncaceae in länglicher Form eingesetzt, insbesondere von Gräsern, Rasengräser, Getreiden und dergleichen. Grundsätzlich sind aber auch Samen in Kugelform, in Form von Rotationsellipsoiden, oder anderer Form einsetzbar.

Mit der Erfindung wird erreicht, dass die pastöse Masse aus Matrix bzw. Binder und Samen zu Saatgutpellets verarbeitet werden können, wobei die Samen im der Matrix eingebettet sind, in welchen die Samen nahezu ohne jegliche Beschädigung sind und folglich einen hohen Pflanzerfolg gewährleisten. Dies wird zudem in produktionstechnischem Maßstab erreicht mit einer konstruktiv einfachen und kontinuierlich betreibbaren Vorrichtung. Insgesamt lässt sich ein aufgrund seiner länglichen Form vorteilhaftes Saatgut in Pelletform in großen Mengen zu geringen Kosten herstellen. Die Schonung der typischerweise länglichen Samen wird dabei dadurch erreicht, dass in Zuge des "Rollens" der Mischung aus Matrix und Samen die Samen durch die einwirkenden Querkräfte allmählich und im Zuge des Hinabwanderns in dem keilförmigen Pelletierraumes innerhalb der Matrix so gedreht werden, dass deren Längserstreckung im Wesentlichen parallel zur Längserstreckung der entstehenden Pellets verläuft.

Im Einzelnen bestehen verschiedene Möglichkeiten der Weiterbildung der Erfindung.

Für die Erfindung ist es unwesentlich, ob die Außentrommel oder die Innentrommel von der Antriebseinheit angetrieben wird. Konstruktionstechnisch wird ein Antrieb der Innentrommel zweckmäßig sein. Es ist aber auch möglich, die Innentrommel und die Außentrommel gleichsinnig oder gegensinnig rotierend anzutreiben, sofern die Außenfläche der Innentrommel und die Innenfläche der Außentrommel relativ zueinander bewegt werden, i.e. unterschiedliche Winkelgeschwindigkeiten aufweisen.

Die Außenfläche der Innentrommel und/oder die Innenfläche der Außentrommel kann, in einer orthogonal zu der ersten Achse und/oder der zweiten Achse stehenden Querschnittsfläche eine Kreisform, eine Polygonform, oder eine andere von einer Kreisform abweichenden Form aufweist. Mit anderen Worten ausgedrückt, die jeweiligen Mantelflächen können in diesem Querschnitt betrachtet abweichend von der Kreisform auch in der beschriebenen Weise strukturiert sein. Diese Strukturierung kann nur auf der Innenfläche der Außentrommel, nur auf der Außenfläche der Innentrommel, oder auf beiden, Innenfläche und Außenfläche, vorgesehen sein, in letzterem Falle gleich oder verschieden.

Die erste Achse und die zweite Achse können coaxial zueinander, gegeneinander parallel versetzt, oder gegeneinander um einen Winkel beta verschränkt sein.

Die Außenfläche der Innentrommel und/oder die Innenfläche der Außentrommel können eine Beschichtung aus einem gummielastischen Werkstoff, insbesondere einem hydrophoben gummieleastischen Werkstoff, beispielsweise einem synthetischen oder natürlichen elastomeren organischen Polymer aufweisen, vorzugsweise aus Gummi, Silikon, oder Latex. Dies reduziert einerseits ein Anhaften der pastösen Matrix an den betreffenden Wandungen. Andererseits ist in diesem Zusammenhang wesentlich, dass eine weiche Oberfläche erzeugt wird, welche ein "Rollen" der entstehenden Pellets erzeugt. Hierzu ist es vorteilhaft, wenn diese Beschichtung eine Dicke im Bereich von 0,1 bis 5 mm, insbesondere 0,5 bis 3 mm, aufweist und/oder eine Shore A Härte im Bereich von 10 bis 80, insbesondere von 20 bis 50. Dabei kann nur die Innentrommel, nur die Außentrommel oder können beide, Innen- und Außentrommel mit einer solchen Beschichtung versehen sein, in letzterem Falle gleich oder verschieden. Die Innentrommel und die Außentrommel selbst sind zweckmäßigerweise aus Stabilitätsgründen aus einem metallischen Werkstoff, wie Stahl, insbesondere rostfreier Stahl, oder einer Leichtmetalllegierung gebildet. Andere Werkstoffe, beispielsweise organische Polymerwerkstoffe, ggf. mit Faser oder Netzbewehrung, sind natürlich auch möglich, sofern diese die nötige Langzeitstabilität gewährleisten.

Die Außenfläche der Innentrommel und/oder die Innenfläche der Außentrommel kann, in der in einer vertikalen Ebene verlaufenden Querschnittfläche betrachtet, geradlinig, konvex gekrümmt, konkav gekrümmt, stufenförmig, oder polygonförmig verlaufen. Ein geradliniger Verlauf entspricht beispielsweise einer Zylinderform oder Kegelform, sofern die Form in einer hierzu orthogonalen Querschnittsfläche die Kreisform ist.

Die Außenfläche der Innentrommel und/oder die Innenfläche der Außentrommel, in der in einer vertikalen Ebene verlaufenden Querschnittfläche betrachtet, bilden vorzugsweise einen Keilwinkel alpha, welcher in vertikaler Richtung nach oben konstant oder ansteigend ist. Hiermit wird in diesem Querschnitt betrachtet gleichsam ein Trichter gebildet, in welchem die Pellets hinunter wandern, hierbei ihren Durchmesser reduzierend.

Die Außenfläche der Innentrommel und/oder die Innenfläche der Außentrommel, in der in einer vertikalen Ebene verlaufenden Querschnittfläche betrachtet, bilden vorzugsweise einen Keilwinkel, welcher, konstant oder ansteigend, im Bereich von über 0° bis 30°, insbesondere von über 0° bis 15°, liegt.

Die Innenfläche der Außentrommel und die Außenfläche der Innentrommel rotieren vorzugsweise mit der Maßgabe relativ zueinander, dass die minimale relative Lineargeschwindigkeit zwischen der Innenfläche und der Außenfläche 0,05 m/s, insbesondere 0,2 m/s, und die maximale relative Lineargeschwindigkeit zwischen der Innenfläche und der Außenfläche 5 m/s, insbesondere 2 m/s, beträgt.

Der Durchmesser der erhaltenen Pellets ist bestimmt durch den Abstand der Innenfläche der Außentrommel von der Außenfläche der Innentrommel am Fuße des keilförmigen und unten offenen Pelletierraumes. Dieser Abstand beträgt daher gemäß den Ausführungen zu Durchmessern der gewünschten Pellets und ist vorzugsweise einstellbar.

Eine erfindungsgemäße Vorrichtung umfasst selbstverständlich typischerweise eine Steuereinheit, mittels welcher die Antriebseinheit ansteuerbar und ggf. auch der vorstehend angesprochene Abstand einstellbar ist. Sie ist aber nicht zwingend notwendig, wenn eine solche Einstellbarkeit nicht gewünscht oder nicht notwendig ist.

Der keilförmige Pelletierraum, welcher sich in vertikaler Richtung nach unten verjüngt und an seinem unteren Ende offen ist, weist an seinem unteren Ende eine Auslassöffnung, typischerweise in Form eines Ringspaltes, auf. Diese kann unmittelbar bei dem unteren Ende angeordnet sein. Es ist aber auch möglich, dass sich an das untere Ende des Pelletierraumes ein Auslassraum, betrachtet in demselben Querschnitt, wie der keilförmige Pelletierraum, anschließt, dessen Weite entweder konstant ist, oder sich in Richtung von dem unteren Ende des Pelletierraumes weg auf weitet. Ebenso kann ein erster Teil des Auslassraumes eine konstante Weite aufweisen, an welchen sich ein zweiter Teil des Auslassraumes anschließt, welcher sich auf weitet.

Im Bereich des Pelletierraumes bewirkt in erster Linie die Schwerkraft das Hinabwandern der Pellets in dem keilförmigen Pelletierraum. Zumindest im unteren Bereich des Pelletierraumes kann jedoch auch die auf die Pellets wirkende Zentrifugalkraft hinzu treten und die Pellets in Richtung der Auslassöffnung und durch diese hindurch bewegen. Dies wird insbesondere dann erfolgen, wenn das untere Ende des keilförmigen Pelletierraumes radial nach außen weist und/oder die Innentrommel und die Außentrommel gleichsinnig rotieren.

Die Erfindung lehrt des Weiteren die Verwendung einer erfindungsgemäßen Vorrichtung zur Herstellung von länglichen Pellets aus einer pastösen Masse, insbesondere aus einer Saatgut enthaltenden pastösen Matrix.

Die Erfindung lehrt schließlich auch ein Verfahren zur Herstellung von länglichen Pellets aus einer pastösen Masse, insbesondere aus einer Saatgut enthaltenden pastösen Matrix, wobei die pastöse Masse hergestellt oder bereitgestellt wird, insbesondere durch Mischen von (vorzugsweise länglichem) Saatgut mit einer pastösen Matrix, wobei die pastöse Masse von oben in den Pelletierraum einer erfindungsgemäßen Vorrichtung eingefüllt wird, kontinuierlich oder diskontinuierlich, wobei die pastöse Masse in dem Pelletierraum durch die eigene Schwerkraft sowie die gegeneinander rotierenden Innenfläche der Außentrommel und Außenfläche der Innentrommel zu länglichen Pellets gerollt werden (hierbei längliche Samen in der Matrix so rotierend, dass im Zuge des Rollens deren erste Dimension im Wesentlichen parallel zur ersten Dimension der Pellets eingerichtet wird), deren Durchmesser, in vertikaler Richtung nach unten wandernd, abnimmt, und wobei die Pellets dem Fuß des Pelletierraumes entnommen und optional getrocknet und/oder verpackt werden.

Die Erfindung ermöglicht schließlich die Herstellung von Pellets, insbesondere aus in einer Matrix eingebettem Saatgut, mittels eines erfindungsgemäßen Verfahrens.

Im Folgenden wird die Erfindung anhand von lediglich Ausführungsbeispiele darstellenden Figuren dargestellt. Es zeigen:
Figur 1: einen seitlichen (vertikalen) Querschnitt durch eine erfindungsgemäße Vorrichtung,
Figur 2: einen horizontalen Querschnitt durch den Gegenstand der Figur 1,
Figuren 3 bis 11: Varianten des Gegenstandes der Figur 1,
Figuren 12 bis 20: Varianten des Gegenstandes der Figur 2, und
Figur 21: Querschnitte durch ein mit einer erfindungsgemäßen Vorrichtung herstellbaren Pellets.

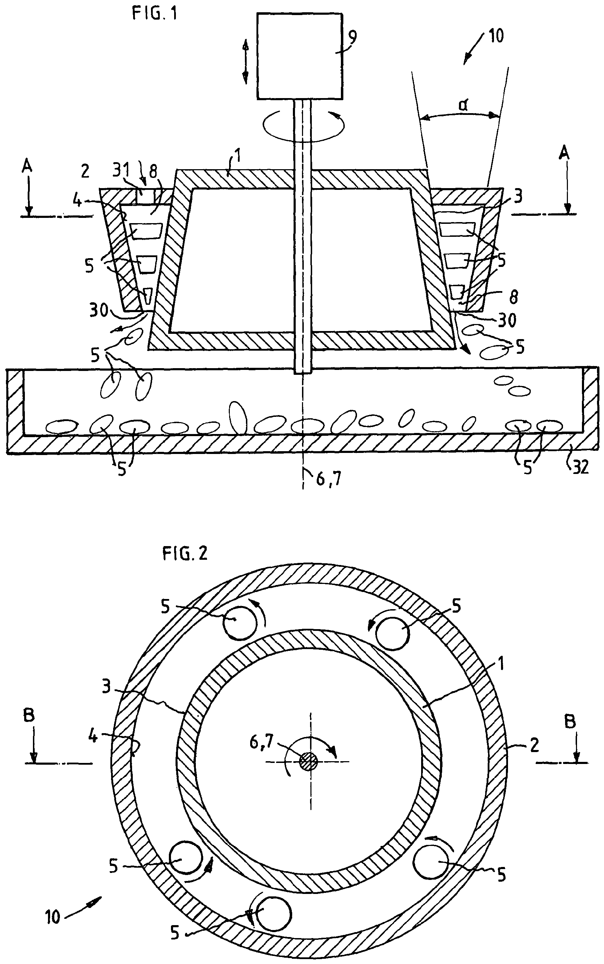

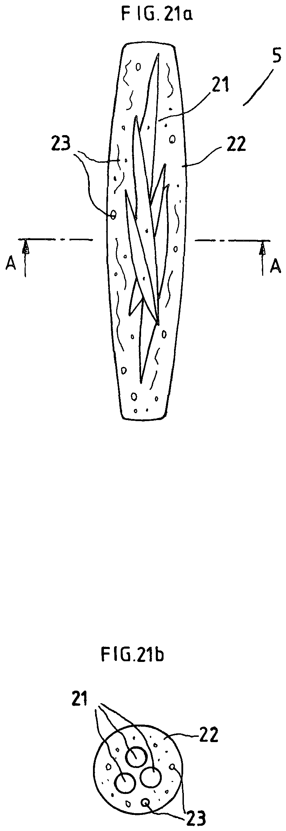

In den Figuren 1 und 2 erkennt man eine erfindungsgemäße Vorrichtung 10 zum Pelletieren insbesondere einer Saatgut enthaltenden pastösen Matrix, wobei die mit der Vorrichtung herstellbaren Pellets 5 eine längliche Form aufweisen (siehe auch Figur 21). Die Vorrichtung weist im Kern eine eine erste Achse 7 aufweisende Außentrommel 2 aufweisend eine Innenfläche 4, und eine eine zweite Achse 6 aufweisende Innentrommel 1 aufweisend eine Außenfläche 3 auf, wobei die Innentrommel 1 in die Außentrommel 2 eingesetzt ist (siehe insbesondere Figur 1). Weiterhin eingerichtet ist eine Antriebseinheit 9, welche die Innentrommel 1 rotierend antreibt mit der Maßgabe, dass die Außenfläche 3 der Innentrommel 1 und die Innenfläche 4 der Außentrommel 2 sich relativ zueinander rotierend bewegen. Hierzu ist die Außentrommel 2 drehfest fixiert. Die Außenfläche 3 und die Innenfläche 4 bilden einen, in einer in einer vertikalen Ebene verlaufenden Querschnittfläche betrachtet, keilförmigen Pelletierraum 8, welcher sich in vertikaler Richtung nach unten verjüngt und an seinem unteren Ende offen ist (Auslassöffnung 30), wozu insbesondere auf die Figur 1 verwiesen wird. Der Pelletierraum 8 wird durch die Einfüllöffnung 31 mit der pastösen Masse, umfassend eine Matrix und darin eingemischte Samen, befüllt. Unterhalb der Auslassöffnung 30 ist ein Auffangbehälter 32 angeordnet. Die Befüllung durch die Einfüllöffnung 31 kann kontinuierlich oder diskontinuierlich (Batchverfahren) erfolgen, ebenso wie die Entleerung des Auffangbehälters 32. In letzterem Falle ist am Boden des Auffangbehälters 32 eine Fördervorrichtung, beispielsweise ein Förderband, eingerichtet, welche die Pellets 5 aus dem Auffangbehälter weg und zu einer Verpackungseinrichtung, optional zuvor zu einer Trocknungseinrichtung, transportiert. Die Innentrommel 1 ist gegenüber der Außentrommel 2 in der Höhe verstellbar, wodurch die Breite der Auslassöffnung 30 und somit der Durchmesser der Pellets 5 einstellen lässt.

Der Figur 2 entnimmt man in dieser Ausführungsform, dass die Außenfläche 3 der Innentrommel 1 und die Innenfläche 4 der Außentrommel 2, in einer orthogonal zu der ersten Achse 7 und/oder der zweiten Achse 6 stehenden Querschnittsfläche, eine Kreisform aufweisen.

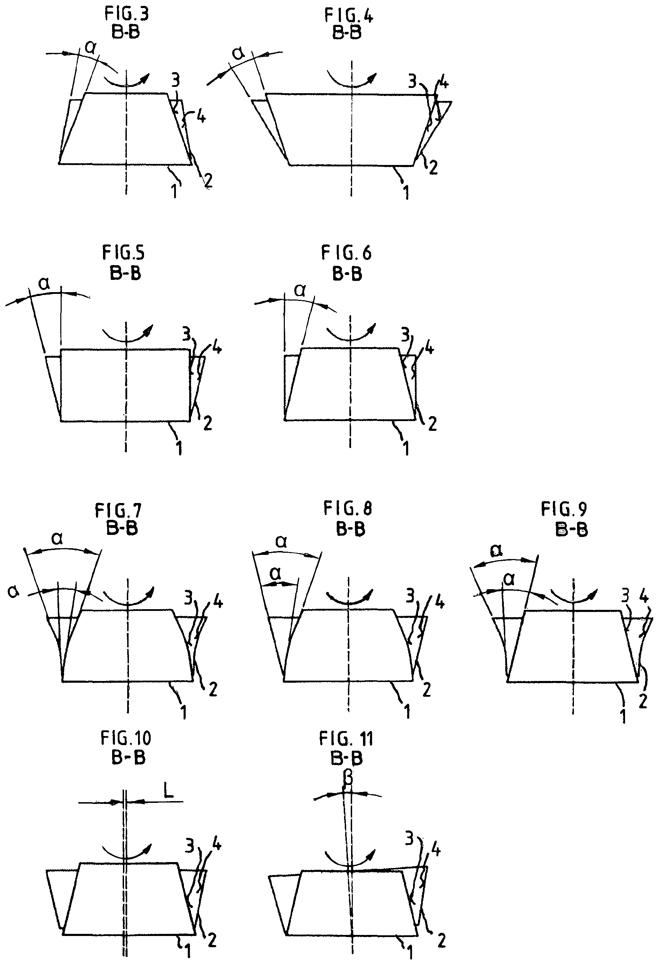

In den Figuren 3, 4, 5 und 6 ist dargestellt, dass die Außenfläche 3 der Innentrommel 1 und/oder die Innenfläche 4 der Außentrommel 2, in der in einer vertikalen Ebene verlaufenden Querschnittfläche betrachtet, geradlinig, sein kann. In den Figuren 7, 8 und 9 ist dargestellt, dass die Außenfläche 3 der Innentrommel 1 und/oder die Innenfläche 4 der Außentrommel 2, in der in einer vertikalen Ebene verlaufenden Querschnittfläche betrachtet, konvex gekrümmt sein kann. Die Außenfläche 3 der Innentrommel 1 und/oder die Innenfläche 4 der Außentrommel 2 bilden, in der in einer vertikalen Ebene verlaufenden Querschnittfläche betrachtet, einen Keilwinkel alpha, welcher in vertikaler Richtung nach oben konstant (Figuren 3 bis 6) oder ansteigend (Figuren 7 bis 9) ist. Der Winkel alpha (auch alpha 1 und alpha 2) liegt typischerweise im Bereich von 0° bis 30°, insbesondere 0° bis 15°.

In den Figuren 10 und 11 ist dargestellt, dass die erste Achse 7 und die zweite Achse 6 nicht notwendigerweise coaxial zueinander stehen, wie in den Figuren 1 bis 9 dargestellt, sondern gegeneinander parallelversetzt (Figur 10), oder gegeneinander um einen Winkel beta verschränkt (Figur 11) sein können.

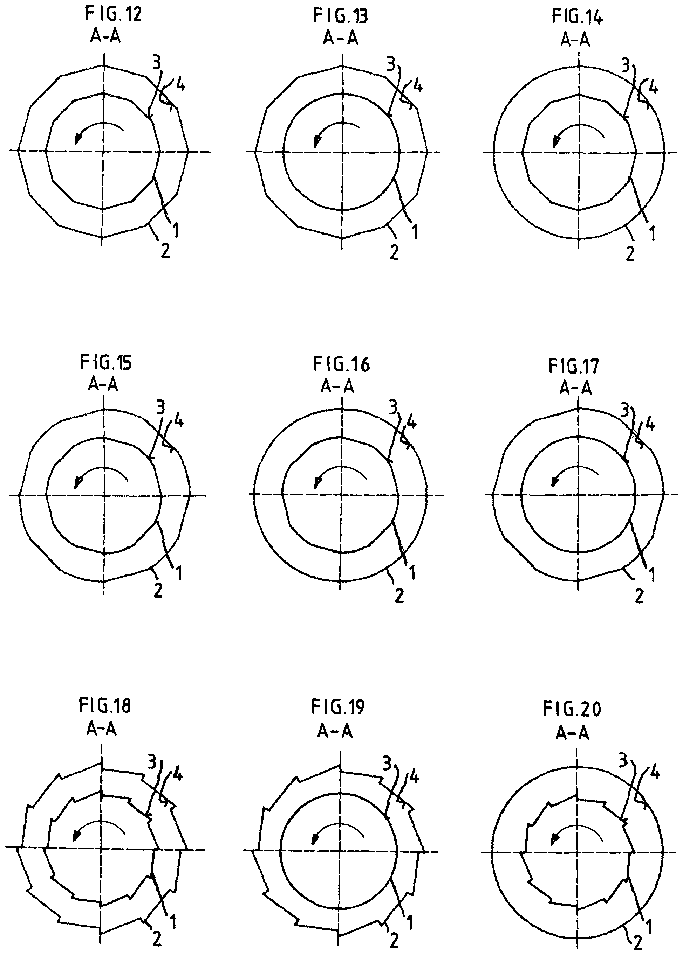

Die Außenfläche 3 der Innentrommel 1 und/oder die Innenfläche 4 der Außentrommel 2, können in einer orthogonal zu der ersten Achse 7 und/oder der zweiten Achse 6 stehenden Querschnittsfläche eine Kreisform, eine Polygonform, oder eine andere von einer Kreisform abweichenden Form aufweisen, wozu auf die Darstellungen der Figuren 12 bis 20 verwiesen wird.

Im Ausführungsbeispiel weisen die Außenfläche 3 der Innentrommel 1 und die Innenfläche 4 der Außentrommel 2 eine Beschichtung aus Silikon auf.

Die Innenfläche 4 der Außentrommel 2 und die Außenfläche 3 der Innentrommel 1 werden mittels Ansteuerung der Antriebseinheit 9 mit der Maßgabe relativ zueinander rotieren, dass die minimale relative Lineargeschwindigkeit zwischen einem Punkt der Innenfläche 4 und der Außenfläche 3 0,2 m/s und die maximale relative Lineargeschwindigkeit zwischen der Innenfläche 4 und der Außenfläche 3 2 m/s beträgt.

Der Durchmesser der gebildeten Pellets lässt sich dadurch einstellen, dass die relative Höhe der Innentrommel 1 und der Außentrommel 2 zueinander eingestellt wird. Dadurch ist die Breite des Ringspaltes variabel, welcher sich am unteren Rand der Innentrommel 1 oder Außentrommel 2 bildet und das untere Ende des Pelletierraumes 8 darstellt.

Mit einer erfindungsgemäßen Vorrichtung lässt sich ein Verfahren zur Herstellung von länglichen Pellets (5) aus einer pastösen Masse, insbesondere aus einer Saatgut enthaltenden pastösen Matrix durchführen. Hierzu wird zunächst die pastöse Masse hergestellt oder bereitgestellt, insbesondere durch Mischen von Saatgut mit einer pastösen Matrix.

Ein Beispiel hierfür umfasst:

| | |
|---|---|
| Rasensamen | 5 mg |
| Lehm | 170 mg |
| Pyroxsulam 68 (Herbizid) | 1 µg |
| Florasulam 23 (Herbizid) | 1 µg |
| Triadimenol (Fungizid) | 2,5 µg |
| Nitratdünger | 20 mg |
| Cocosfasern | 2 mg |

Die durch Mischen dieser Komponenten erhaltene pastöse Masse wird von oben in den Pelletierraum (8) einer erfindungsgemäßen Vorrichtung 10 eingefüllt, kontinuierlich oder diskontinuierlich. Die pastöse Masse wird in dem Pelletierraum 8 durch die eigene Schwerkraft sowie die gegeneinander rotierenden Innenfläche 4 der Außentrommel 2 und Außenfläche 3 der Innentrommel 1 zu länglichen Pellets 5 gerollt werden, deren Durchmesser, in vertikaler Richtung nach unten wandernd, abnimmt. Die Pellets 5 dem Fuß des Pelletierraumes 8 entnommen und getrocknet und dann verpackt.

Ein mittels der erfindungsgemäßen Vorrichtung sowie des erfindungsgemäßen Verfahren hergestelltes Pellet 5 ist in der Figur 21 dargestellt. Figur 21a zeigt einen Längsquerschnitt und Figur 21b einen Querschnitt in der Ebene A-A der Figur 21a. Man erkennt Samen 21, beispielsweise Rasensamen, von länglicher Form. Diese sind in einer Matrix 22 eingebettet, beispielsweise in der vorstehend lediglich beispielhaft dargestellten Zusammensetzung. Schließlich erkennt man optional vorhandene und zusätzlich in die Matrix 22 eingebettete Partikel und Fasern 23, beispielsweise der vorstehend beschriebenen Art.

## Patentansprüche

1. Vorrichtung (10) zum Pelletieren einer pastösen Masse, insbesondere einer Saatgut enthaltenden pastösen Matrix, wobei die mit der Vorrichtung herstellbaren Pellets (5) eine längliche Form aufweisen,
mit einer eine erste Achse aufweisenden Außentrommel (2) aufweisend eine Innenfläche (4), mit einer eine zweite Achse aufweisenden Innentrommel (1) aufweisend eine Außenfläche (3), wobei die Innentrommel (1) in die Außentrommel (2) eingesetzt ist,
mit einer Antriebseinheit (9), welche die Innentrommel (1) um die zweite Achse (6) und/oder die Außentrommel (2) um die erste Achse (7) rotierend antreibt mit der Maßgabe, dass die Außenfläche (3) der Innentrommel (1) und die Innenfläche (4) der Außentrommel (2) sich relativ zueinander rotierend bewegen,
wobei die Außenfläche (3) und die Innenfläche (4) einen, in einer in einer vertikalen Ebene verlaufenden Querschnittfläche betrachtet, keilförmigen Pelletierraum (8) bilden, welcher sich in vertikaler Richtung nach unten verjüngt und an seinem unteren Ende offen ist.

2. Vorrichtung (10) nach Anspruch 1, wobei die Außentrommel (2), oder die Innentrommel (1) von der Antriebseinheit (9) angetrieben wird.

3. Vorrichtung (10) nach einem der Ansprüche 1 oder 2, wobei die Außenfläche (3) der Innentrommel (1) und/oder die Innenfläche (4) der Außentrommel (2), in einer orthogonal zu der ersten Achse (7) und/oder der zweiten Achse (6) stehenden Querschnittsfläche eine Kreisform oder eine Polygonform aufweist.

4. Vorrichtung (10) nach einem der Ansprüche 1 bis 3, wobei die erste Achse (7) und die zweite Achse (6) coaxial zueinander, gegeneinander parallelversetzt, oder gegeneinander um einen Winkel beta verschränkt sind.

5. Vorrichtung (10) nach einem der Ansprüche 1 bis 4, wobei die Außenfläche (3) der Innentrommel (1) und/oder die Innenfläche (4) der Außentrommel (2) eine Beschichtung aus einem gummielastischen Werkstoff, insbesondere einem hydrophoben gummieleastischen Werkstoff, beispielsweise einem synthetischen oder natürlichen elastomeren organischen Polymer aufweist, vorzugsweise aus Gummi, Silikon, oder Latex.

6. Vorrichtung (10) nach einem der Ansprüche 1 bis 5, wobei die Außenfläche (3) der Innentrommel (1) und/oder die Innenfläche (4) der Außentrommel (2), in der in einer vertikalen Ebene verlaufenden Querschnittfläche betrachtet, geradlinig, konvex gekrümmt, konkav gekrümmt, stufenförmig, oder polygonförmig verlaufen.

7. Vorrichtung (10) nach einem der Ansprüche 1 bis 6, wobei die Außenfläche (3) der Innentrommel (1) und/oder die Innenfläche (4) der Außentrommel (2), in der in einer vertikalen Ebene verlaufenden Querschnittfläche betrachtet, einen Keilwinkel alpha bilden, welcher in vertikaler Richtung nach oben konstant oder ansteigend ist.

8. Vorrichtung (10) nach einem der Ansprüche 1 bis 7,
wobei die Außenfläche (3) der Innentrommel (1) und/oder die Innenfläche (4) der Außentrommel (2), in der in einer vertikalen Ebene verlaufenden Querschnittfläche betrachtet, einen Keilwinkel bilden, welcher, konstant oder ansteigend, im Bereich von 0° bis 30°, insbesondere von 0° bis 15°, liegt und/oder
wobei die Innenfläche (4) der Außentrommel (2) und die Außenfläche (3) der Innentrommel (1) mit der Maßgabe relativ zueinander rotieren, dass die minimale relative Lineargeschwindigkeit zwischen einem Punkt der Innenfläche (4) und der Außenfläche (3) 0,05 m/s, insbesondere 0,2 m/s, und die maximale relative Lineargeschwindigkeit zwischen der Innenfläche (4) und der Außenfläche (3) 5 m/s, insbesondere 2 m/s, beträgt.

9. Verwendung einer Vorrichtung (10) nach einem der Ansprüche 1 bis 8 zur Herstellung von länglichen Pellets (5) aus einer pastösen Masse, insbesondere aus einer Saatgut enthaltenden pastösen Matrix.

10. Verfahren zur Herstellung von länglichen Pellets (5) aus einer pastösen Masse, insbesondere aus einer Saatgut enthaltenden pastösen Matrix,
wobei die pastöse Masse hergestellt oder bereit gestellt wird, insbesondere durch Mischen von Saatgut mit einer pastösen Matrix,
wobei die pastöse Masse von oben in den Pelletierraum (8) einer Vorrichtung (10) nach einem der Ansprüche 1 bis 8 eingefüllt wird, kontinuierlich oder diskontinuierlich,
wobei die pastöse Masse in dem Pelletierraum (8) durch die eigene Schwerkraft sowie die gegeneinander rotierenden Innenfläche (4) der Außentrommel (2) und Außenfläche (3) der Innentrommel (1) zu länglichen Pellets (5) gerollt werden, deren Durchmesser, in vertikaler Richtung nach unten wandernd, abnimmt, und
wobei die Pellets (5) dem Fuß des Pelletierraumes (8) entnommen, kontinuierlich oder diskontinuierlich, und optional getrocknet und/oder verpackt werden.

## Claims

1. A device (10) for pelleting a past-like mass, in particular a past-like matrix containing seeds, the pellets (5) to be made with the device having an elongate shape,
with an exterior drum (2) including a first axis and an inner surface (4),
with an interior drum (1) including a second axis and an outer surface (3), the interior drum (1) being inserted into the exterior drum (2),
with a drive unit (9), which drives the interior drum (1) in rotation about the second axis (6) and/or the exterior drum (2) about the first axis (7) with the proviso that the outer surface (3) of the interior drum (1) and the inner surface (4) of the exterior drum (2) rotatingly move in relation to each other,
wherein the outer surface (3) and the inner surface (4) form, viewed in a cross-section surface extending in a vertical plane, a wedge-shaped pelleting space (8), which is tapering downwardly in the vertical direction and is open at its lower end.

2. The device (10) according to claim 1, wherein the exterior drum (2), or the interior drum (1) is driven by the drive unit (9).

3. The device (10) according to one of claims 1 or 2, wherein the outer surface (3) of the interior drum (1) and/or the inner surface (4) of the exterior drum (2) have, in a cross-section surface disposed orthogonally to the first axis (7) and/or the second axis (6), a circular shape or a polygonal shape.

4. The device (10) according to one of claims 1 to 3, wherein the first axis (7) and the second axis (6) are offset coaxially to each other, in parallel to each other, or are interlocked against each other by an angle beta.

5. The device (10) according to one of claims 1 to 4, wherein the outer surface (3) of the interior drum (1) and/or the inner surface (4) of the exterior drum (2) comprise a coating of a rubber-elastic material, in particular a hydrophobic rubber-elastic material, for instance a synthetic or natural elastomeric organic polymer, preferably of rubber, silicone, or latex.

6. The device (10) according to one of claims 1 to 5, wherein the outer surface (3) of the interior drum (1) and/or the inner surface (4) of the exterior drum (2), viewed in the cross-section surface extending in a vertical plane, extend in a straight-lined, convexly curved, concavely curved, step-shaped, or polygon-shaped manner.

7. The device (10) according to one of claims 1 to 6, wherein the outer surface (3) of the interior drum (1) and/or the inner surface (4) of the exterior drum (2), viewed in the cross-section surface extending in a vertical plane, form a wedge angle alpha, which is, upwardly in the vertical direction, constant or increasing.

8. The device (10) according to one of claims 1 to 7, wherein the outer surface (3) of the interior drum (1) and/or the inner surface (4) of the exterior drum (2), viewed in the cross-section surface extending in a vertical plane, form a wedge angle, which, constant or increasing, is in the range from 0° to 30°, in particular from 0° to 15°, and/or
wherein the inner surface (4) of the exterior drum (2) and the outer surface (3) of the interior drum (1) rotate in relation to each other with the proviso that the minimum relative linear speed between a point of the inner surface (4) and of the outer surface (3) is 0.05 m/s, in particular 0.2 m/s, and the maximum relative linear speed between the inner surface (4) and the outer surface (3) is 5 m/s, in particular 2 m/s.

9. Use of a device (10) according to one of the claims 1 to 8 for making elongated pellets (5) from a past-like mass, in particular from a past-like matrix containing seeds.

10. Method for making of elongated pellets (5) from a past-like mass, in particular from a past-like matrix containing seeds,
wherein the paste-like mass is made or provided, in particular by mixing of seeds with a paste-like matrix,
wherein the paste-like mass is filled into the pelleting space (8) of a device (10) according to one of the claims 1 to 8 from the top, continuously or discontinuously,
wherein the paste-like mass in the pelleting space (8) is rolled to elongated pellets (5) by own gravity as well as by the rotating inner surface (4) of the exterior drum (2) and the outer surface (3) of the interior drum (1), the diameter of which decreases migrating in vertical direction downwards, and
wherein the pellets (5) are taken from the bottom of the pelleting space (8) continuously or discontinuously, and are optionally dried and/or packed.

## Revendications

1. Dispositif (10) de granulation d'une masse pâteuse, en particulier d'une matrice pâteuse contenant des semences, les granulés (5) à être produits avec le dispositif ayant une forme oblongue,
avec un tambour extérieur (2) comportant un premier axe et une surface intérieure (4),
avec un tambour intérieur (1) comportant un deuxième axe et une surface extérieure (3), le tambour intérieur (1) étant inséré dans le tambour extérieur (2),
avec une unité d'entraînement (9), qui entraîne le tambour intérieur (1) en rotation autour du deuxième axe (6) et/ou le tambour extérieur (2) autour du premier axe (7) sous réserve que la surface extérieure (3) du tambour intérieur (1) et la surface intérieure (4) du tambour extérieur (2) se déplacent en rotation l'une par rapport à l'autre,
dans lequel la surface extérieure (3) et la surface intérieure (4) forment, vu en coupe transversale s'étendant dans un plan vertical, un espace de granulation (8) en forme de coin, qui se rétrécit vers le bas en direction verticale et est ouvert à son extrémité inférieure.

2. Dispositif (10) selon la revendication 1, dans lequel le tambour extérieur (2), ou le tambour intérieur (1) est entraîné par l'unité d'entraînement (9).

3. Dispositif (10) selon une des revendications 1 ou 2, dans lequel la surface extérieure (3) du tambour intérieur (1) et/ou la surface intérieure (4) du tambour extérieur (2) ont, dans une surface de la section disposée orthogonalement au premier axe (7) et/ou au deuxième axe (6), une forme circulaire ou une forme polygonale.

4. Dispositif (10) selon une des revendications 1 à 3, dans lequel le premier axe (7) et le deuxième axe (6) sont décalés de manière coaxiale l'un par rapport à l'autre, en parallèle l'un par rapport à l'autre, ou sont entrecroisés l'un par rapport à l'autre par un angle bêta.

5. Dispositif (10) selon une des revendications 1 à 4, dans lequel la surface extérieure (3) du tambour intérieur (1) et/ou la surface intérieure (4) du tambour extérieur (2) comprennent un couche en un matériau en caoutchouc élastique, en particulier en un matériau en caoutchouc élastique hydrophobique, par exemple un polymère organique élastomérique synthétique ou naturel, de préférence en caoutchouc, silicone, ou latex.

6. Dispositif (10) selon une des revendications 1 à 5, dans lequel la surface extérieure (3) du tambour intérieur (1) et/ou la surface intérieure (4) du tambour extérieur (2), vu en coupe transversale s'étendant dans un plan vertical, s'étendent de manière rectiligne, bombée convexe, bombée concave, en forme d'étapes, ou en forme de polygone.

7. Dispositif (10) selon une des revendications 1 à 6, dans lequel la surface extérieure (3) du tambour intérieur (1) et/ ou la surface intérieure (4) du tambour extérieur (2), vu en coupe transversale s'étendant dans un plan vertical, forment un angle de coin alpha, qui est, vers le haut en direction vertical, constant ou croissant.

8. Dispositif (10) selon une des revendications 1 à 7,
dans lequel la surface extérieure (3) du tambour intérieur (1) et/ou la surface intérieure (4) du tambour extérieur (2), vu en coupe transversale s'étendant dans un plan vertical, forment un angle de coin, qui, constant ou croissant, est compris dans la gamme entre 0° et 30°, en particulier entre 0° et 15°, et/ou
dans lequel la surface intérieure (4) du tambour extérieur (2) et la surface extérieure (3) du tambour intérieur (1) tournent l'une par rapport à l'autre sous réserve que la vitesse linéaire relative minimale entre un point de la surface intérieure (4) et la surface extérieure (3) soit de 0,05 m/s, en particulier 0,2 m/s, et la vitesse linéaire relative maximale entre la surface intérieure (4) et la surface extérieure (3) soit de 5 m/s, en particulier 2 m/s.

9. Utilisation d'un dispositif (10) selon l'une des revendications 1 à 8 pour la fabrication de granulés allongés (5) à partir d'une masse pâteuse, en particulier à partir d'une matrice pâteuse contenant des graines.

10. Procédé de fabrication de granulés allongés (5) à partir d'une masse pâteuse, en particulier à partir d'une matrice pâteuse contenant des graines,
où la masse pâteuse est fabriquée ou fournie, notamment par le mélange de graines avec une matrice pâteuse,
dans laquelle la masse pâteuse est introduite dans l'espace de granulation (8) d'un dispositif (10) selon l'une des revendications 1 à 8 par le haut, de manière continue ou discontinue,
où la masse pâteuse dans l'espace de granulation (8) est roulé en boulettes allongées (5) par sa propre gravité ainsi que par la surface intérieure rotative (4) du tambour extérieur (2) et la surface extérieure (3) du tambour intérieur (1), dont le diamètre diminue en migrant dans le sens vertical vers le bas, et
où les granulés (5) sont prélevés au fond de l'espace de granulation (8) de manière continue ou discontinue, et sont éventuellement séchés et/ou emballés.
